# EUROPÄISCHE PATENTANMELDUNG

(11) **EP 2 206 969 A2**
(43) Veröffentlichungstag der Anmeldung: **14.07.2010**
(21) Anmeldenummer: 09450228.3
(22) Anmeldetag: 01.12.2009
(51) Int. Cl.: F24D 3/10, F24H 9/12

(54) **Wärmespeicher**

(30) Priorität: 08.01.2009 AT 202009
(71) Anmelder: Teufel, Arnold, 6372 Oberndorf (AT)
(72) Erfinder: Teufel, Arnold, 6372 Oberndorf (AT)
(74) Vertreter: Hübscher, Helmut

(57) **Zusammenfassung**

Es wird ein Wärmespeicher mit einem Behälter (1) zur temperaturgeschichteten Aufnahme eines Wärmeträgers und mit wenigstens einem Ladekreis (9) beschrieben, der einen außerhalb des Behälters (1) vorgesehenen Wärmetauscher (7) zum Erwärmen des Wärmeträgers und eine sich zumindest über einen Teil der Behälterhöhe erstreckende, mit dem Behälter (1) in unterschiedlichen Höhen strömungsverbundene, außerhalb des Behälters (1) verlaufende Steigleitung (11) für den erwärmten Wärmeträger umfasst. Um vorteilhafte Ladungsbedingungen zu schaffen, wird vorgeschlagen, dass die mit dem Bodenbereich des Behälters (1) strömungsverbundene Steigleitung (11) an den Vor- und den Rücklauf des über eine Ladepumpe (10) für den Wärmeträger beaufschlagbaren Wärmetauschers (7) angeschlossen ist.

## Beschreibung

Die Erfindung bezieht sich auf einen Wärmespeicher mit einem Behälter zur temperaturgeschichteten Aufnahme eines Wärmeträgers und mit wenigstens einem Ladekreis, der einen außerhalb des Behälters vorgesehenen Wärmetauscher zum Erwärmen des Wärmeträgers und eine sich zumindest über einen Teil der Behälterhöhe erstreckende, mit dem Behälter in unterschiedlichen Höhen strömungsverbundene, außerhalb des Behälters verlaufende Steigleitung für den erwärmten Wärmeträger umfasst.

Um ohne Steuerungsaufwand eine der Temperaturschichtung entsprechende Ladung eines Wärmespeichers über einen Ladekreis zu gewährleisten, der einen außerhalb des Wärmespeicherbehälters angeordneten Wärmetauscher zum Erwärmen des Wärmeträgers über ein Heizmedium und eine sich zumindest über einen Teil der Behälterhöhe erstreckende, mit dem Behälter in unterschiedlichen Höhen strömungsverbundene Steigleitung für den erwärmten Wärmeträger umfasst, ist es bekannt (EP 924 471 A2), die außerhalb des Behälters verlaufende, über Verbindungsleitungen an den Behälter angeschlossene Steigleitung mit dem Wärmetauscher zu einem selbstumlaufenden Ladekreis zusammenzuschließen. Im Gegensatz zu Wärmetauschern mit einem Zwangsumlauf wird die Ladekreisströmung eines selbstumlaufenden Ladekreises von der jeweiligen Temperatur des im Wärmetauscher erwärmten Wärmeträgers und der Schichttemperatur im Behälter bestimmt, sodass sich für die Beibehaltung der Temperaturschichtung des Wärmeträgers im Behälter während des Ladevorgangs vorteilhafte Strömungsverhältnisse ergeben. Nachteilig ist allerdings, dass im Gegensatz zu Ladekreisen, bei denen der Wärmeträger über eine Ladepumpe in einem Zwangsumlauf geführt wird, im Wärmetauscher ungünstigere Wärmeübergangsverhältnisse zwischen dem Heizmedium und dem zu erwärmenden Wärmeträger zufolge der beschränkten Strömungsgeschwindigkeit des selbstumlaufenden Wärmeträgerkreises in Kauf genommen werden müssen.

Der Erfindung liegt somit die Aufgabe zugrunde, einen Wärmespeicher der eingangs geschilderten Art so auszugestalten, dass eine Ladung des Wärmespeichers unter den für eine Temperaturschichtung vorteilhaften Einströmbedingungen eines selbstumlaufenden Ladekreises gewährleistet werden kann, ohne auf einen Zwangsumlauf des Wärmeträgers durch den Wärmetauscher verzichten zu müssen.

Die Erfindung löst die gestellte Aufgabe dadurch, dass die mit dem Bodenbereich des Behälters strömungsverbundene Steigleitung an den Vor- und den Rücklauf des über eine Ladepumpe für den Wärmeträger beaufschlagbaren Wärmetauschers angeschlossen ist.

Zufolge dieser Maßnahmen ergibt sich zwischen der Steigleitung und dem Behälter ein selbstumlaufender Ladekreis für den Wärmeträger, zwischen dem Wärmetauscher und der Steigleitung jedoch ein Zwangsumlauf, sodass für die Erwärmung des Wärmeträgers im Wärmetauscher für optimale Strömungsgeschwindigkeiten sowohl für das Heizmedium als auch für den Wärmeträger gesorgt ist. Die Weiterleitung des erwärmten Wärmeträgers in den Behälter erfolgt jedoch unter selbstumlaufenden Strömungsbedingungen mit der Wirkung, dass der erwärmte Wärmeträger in Abhängigkeit seiner Temperatur aus der Steigleitung in die zugehörige Temperaturschicht des Wärmeträgers im Behälter überströmt, was vorteilhafte Voraussetzungen für eine Wärmespeicherladung unter weitgehender Beibehaltung der Temperaturschichtung darstellt. Entsprechend der in den Behälter einströmenden Wärmeträgermenge strömt der Wärmeträger aus dem kalten Bodenbereich des Behälters in die Steigleitung, sodass sich diesbezüglich ein für sich geschlossener, selbstumlaufender Ladekreis ergibt.

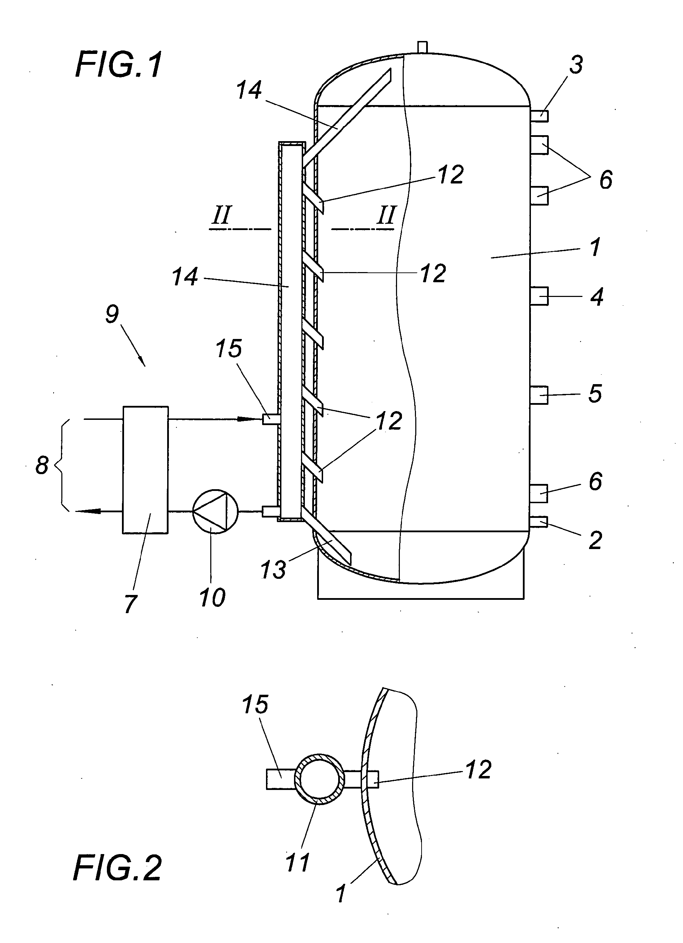

In der Zeichnung ist der Erfindungsgegenstand beispielsweise dargestellt. Es zeigen
- Fig. 1: einen erfindungsgemäßen Wärmespeicher in einer schematischen, zum Teil aufgerissenen Seitenansicht und
- Fig. 2: einen Schnitt nach der Linie II-II der Fig. 1 in einem größeren Maßstab.

Der dargestellte Wärmespeicher weist einen Behälter 1 zur temperaturgeschichteten Aufnahme eines Wärmeträgers, vorzugsweise Wasser, auf. Mit Hilfe dieses Wärmeträgers wird Brauchwasser in einem Wärmetauscher innerhalb des Behälters 1 erwärmt. Die Anschlüsse dieses nicht dargestellten Wärmetauschers für das Kalt- und das Warmwasser sind mit 2 und 3 bezeichnet. Über den Wärmeträger kann außerdem ein Heizkreis beaufschlagt werden, der durch den Vorlauf 4 und den Rücklauf 5 veranschaulicht ist. Außerdem sind Anschlüsse 6 für eine Wärmepumpe angedeutet.

Zum Erwärmen des Wärmeträgers dient ein Wärmetauscher 7, vorzugsweise in Form eines Plattenwärmetauschers, der an den Vor- und Rücklauf eines Heizkreises 8 angeschlossen ist. Dieser Wärmetauscher 7 bildet einen Teil eines Ladekreises 9 für den Wärmeträger, wobei dieser mit einer Ladepumpe 10 ausgestattet Ladekreis 9 über eine außerhalb des Behälters 1 vorgesehene Steigleitung 11 schließt, die an den Vor- und Rücklauf des Wärmetauschers 7 für den Wärmeträger angeschlossen ist. Die Steigleitung 11 selbst ist mit dem Behälter 1 in unterschiedlichen Höhen strömungsverbunden, und zwar mit Hilfe von Einströmstutzen 12. Außerdem steht die Steigleitung 11 über eine Verbindungsleitung 13 mit dem Bodenbereich des Behälters 1 in Strömungsverbindung. Über diese Verbindungsleitung 13 ergibt sich somit für den aus dem Steigrohr 11 in den Behälter 1 überströmenden Wärmeträger ein selbstumlaufender Ladekreis, sodass der Behälter 1 über die Einströmstutzen 12 jeweils in einer Höhe geladen wird, bei der die Temperatur der jeweiligen Wärmeträgerschicht im Behälter 1 der Temperatur des einströmenden Wärmeträgers entspricht. Um den Behälter 1 auch mit höheren Temperaturen laden zu können, führt vom oberen Ende der Steigleitung 11 ein Steigrohr 14 in den Deckenbereich des Behälters 1.

Zum Erwärmen des Wärmeträgers wird dieser aus der Steigleitung 11 über die Ladepumpe 10 durch den Wärmetauscher 7 gefördert, sodass der Steigleitung 11 der erwärmte Wärmeträger über den Wärmetauscheranschluss 15 für den Vorlauf in einem Zwangsumlauf zugeführt wird. Innerhalb der Steigleitung 11 bildet sich eine Konvektionsströmung aus, die Teil des selbstumlaufenden Ladekreises 9 über den Behälter 1 ist und sich über die Verbindungsleitung 13 zwischen dem Behälter 1 und der Steigleitung 11 schließt. Aufgrund der Zusammenführung eines Zwangumlaufs des Ladekreises 9 mit dem Wärmetauscher 7 und eines konvektionsbedingt selbstumlaufenden Ladekreises zwischen der Steigleitung 11 und dem Behälter 1 können somit vorteilhafte Wärmeübergangsbedingungen im Bereich des Wärmetauschers 7 sichergestellt werden, ohne auf eine der Temperaturschichtung des Wärmeträgers im Behälter 1 entsprechende Ladung des Wärmespeichers verzichten zu müssen, was eine vorteilhafte Voraussetzung für die Wahrung der Temperaturschichtung im Behälter 1 während des Ladevorgangs ist.

## Patentansprüche

1. Wärmespeicher mit einem Behälter (1) zur temperaturgeschichteten Aufnahme eines Wärmeträgers und mit wenigstens einem Ladekreis (9), der einen außerhalb des Behälters (1) vorgesehenen Wärmetauscher (7) zum Erwärmen des Wärmeträgers und eine sich zumindest über einen Teil der Behälterhöhe erstreckende, mit dem Behälter (1) in unterschiedlichen Höhen strömungsverbundene, außerhalb des Behälters (1) verlaufende Steigleitung (11) für den erwärmten Wärmeträger umfasst, **dadurch gekennzeichnet, dass** die mit dem Bodenbereich des Behälters (1) strömungsverbundene Steigleitung (11) an den Vor- und den Rücklauf des über eine Ladepumpe (10) für den Wärmeträger beaufschlagbaren Wärmetauschers (7) angeschlossen ist.
